(19) Europäisches Patentamt / European Patent Office / Office européen des brevets

(11) **EP 4 531 156 A1**

(12) **EUROPEAN PATENT APPLICATION**

(43) Date of publication:
**02.04.2025 Bulletin 2025/14**

(21) Application number: **24203368.6**

(22) Date of filing: **27.09.2024**

(51) International Patent Classification (IPC):
***H01M 10/0525*** *(2010.01)* ***H01M 10/0567*** *(2010.01)*

(52) Cooperative Patent Classification (CPC):
**H01M 10/0567; H01M 10/052; H01M 10/0525; H01M 10/0568; H01M 10/0569; H01M 50/105; H01M 50/178;** H01M 2300/0025; Y02E 60/10

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **28.09.2023 CN 202311277229**

(71) Applicant: **Ningde Amperex Technology Ltd.**
**Ningde City, Fujian 352100 (CN)**

(72) Inventor: **CUI, Hui**
**Ningde City, Fujian 352100 (CN)**

(74) Representative: **Icosa**
**83 avenue Denfert-Rochereau**
**75014 Paris (FR)**

(54) **ELECTROLYTE SOLUTION, ELECTROCHEMICAL DEVICE USING SAME AND ELECTRONIC DEVICE**

(57) An electrolyte solution, including fluorine-containing cyclic carbonate represented by Formula I (

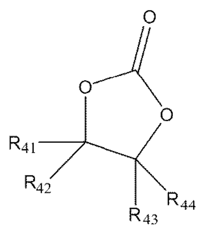

) and a first compound, where the first compound includes at least one of a compound of Formula II (

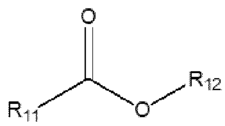

) and a compound of Formula III (

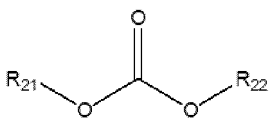

), and where based on a total mass of the electrolyte solution, a mass percent of the first compound is A%, and a mass percent of the fluorine-containing cyclic carbonate represented by Formula I is B%, where A and B satisfy: $40 \leq A \leq 80$, and $3 \leq A/B \leq 11$.

EP 4 531 156 A1

## Description

### TECHNICAL FIELD

This application relates to the field of energy storage, and in particular, to an electrolyte solution, an electrochemical device using the same and an electronic device.

### BACKGROUND

Lithium-ion batteries widely used in the fields such as portable electronic products, electric means of transport, aerospace, and energy reserves by virtue of advantages such as a high energy density, good cycle performance, safety, environmental friendliness, and no memory effect. In order to meet the needs of social development, the search for electrochemical devices with a higher energy density and power density becomes an urgent problem to be solved, which makes positive active materials be developing towards a high voltage direction. As the voltage increases, the reaction of electrolyte solutions at cathode electrolyte interfaces is intensified, resulting in severe high-temperature cycle capacity attenuation.

Therefore, it is necessary to provide an electrolyte solution capable of improving high-temperature cycle performance of the lithium-ion batteries.

### SUMMARY

An embodiment of this application provides an electrolyte solution in an attempt to solve at least one of the problems in a relevant field at least to some extent. Embodiments of this application further provide an electrochemical device using the electrolyte solution and an electronic device.

In an embodiment, this application provides an electrolyte solution, where the electrolyte solution includes:

a fluorine-containing cyclic carbonate represented by Formula I,

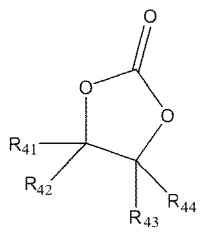

Formula I,

where $R_{41}$, $R_{42}$, $R_{43}$ and $R_{44}$ are each independently F, or substituted or unsubstituted $C_1$ to $C_3$ alkyl; and when substitution is performed, substituent groups are each independently halogen; where at least one of $R_{41}$, $R_{42}$, $R_{43}$ and $R_{44}$ includes F; and

a first compound, including at least one of a compound of Formula II and a compound of Formula III:

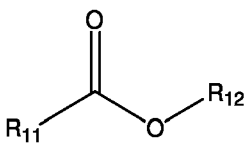

Compound of Formula II

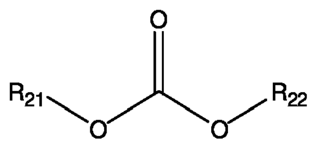

Compound of Formula III,

where $R_{11}$, $R_{12}$, $R_{21}$ and $R_{22}$ are each independently $C_1$ to $C_{10}$ alkyl; and

based on a total mass of the electrolyte solution, a mass percent of the first compound is A%, and a mass percent of the fluorine-containing cyclic carbonate represented by Formula I is B%, where A and B satisfy: $40 \leq A \leq 80$, and $3 \leq A/B \leq 11$.

In some embodiments, $4 < A/B < 9$.

In some embodiments, the electrolyte solution further includes a second compound, and the second compound includes at least one of ethylene carbonate or propylene carbonate, where based on the total mass of the electrolyte

solution, a mass percent of the second compound is C%, where C ≤ 12.

In some embodiments, C < 8.

In some embodiments, 4 < B <_ 17.5.

In some embodiments, the electrolyte solution further includes a fluoroether compound represented by Formula IV:

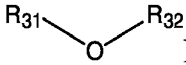 Formula IV,

where $R_{31}$ and $R_{32}$ are each independently selected from substituted or unsubstituted $C_1$ to $C_8$ alkyl or -R'-O-R"; R' is selected from substituted or unsubstituted $C_1$ to $C_8$ alkylidene; R" is selected from substituted or unsubstituted $C_1$ to $C_8$ alkyl; when substitution is performed, substituent groups are each independently halogen; at least one of $R_{31}$ and $R_{32}$ is substituted by F; and based on the total mass of the electrolyte solution, a mass percent of the fluoroether compound represented by Formula IV is D%, and D satisfies 5 ≤ D ≤ 30.

In some embodiments, A, B and D satisfy: 50 <_ (A+B+D) <_ 90.

In some embodiments, A, B and D satisfy: 60 < (A+B+D) < 80.

In some embodiments, the compound of Formula II includes at least one of the following compounds: methyl formate, ethyl formate, methyl acetate, ethyl acetate, propyl acetate, methyl propionate, ethyl propionate, or propyl propionate; and the compound of Formula III includes at least one of the following compounds: dimethyl carbonate, diethyl carbonate, or ethyl methyl carbonate.

In some embodiments, the fluorine-containing cyclic carbonate represented by Formula I includes at least one of the following compounds:

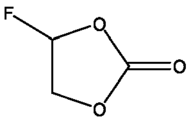 I-1, 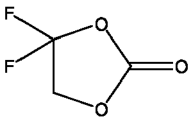 I-2, 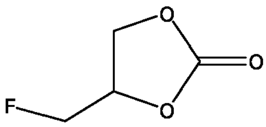 I-3,

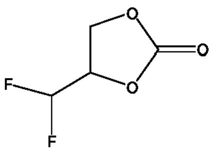 I-4, 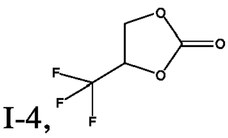 I-5, 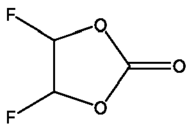 I-6,

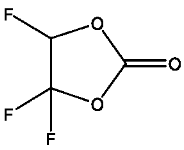 I-7, 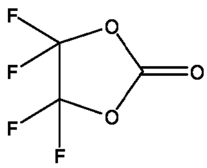 I-8, 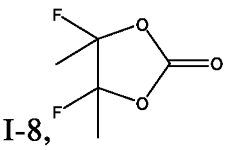 I-9,

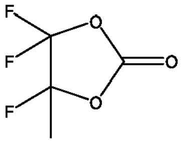 I-10, 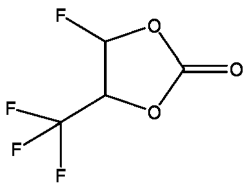 I-11, or 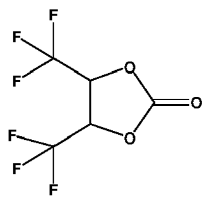 I-12.

In some embodiments, the fluoroether compound represented by Formula IV includes at least one of the following compounds:

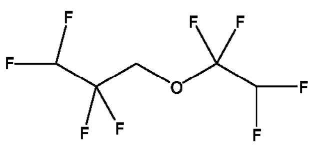 IV-1, 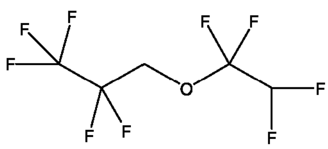 IV-2,

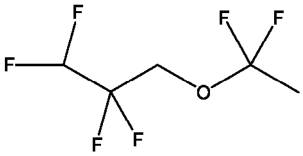 IV-3, 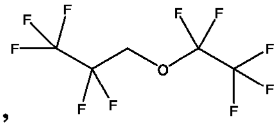 IV-4,

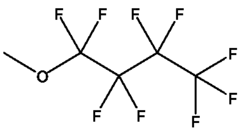 IV-5, 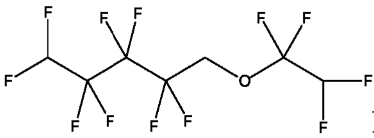 Formula IV-6,

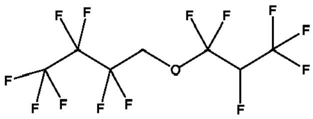 IV-7, 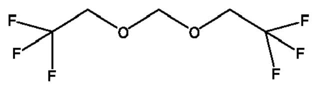 IV-8,

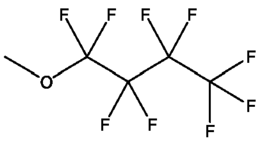 IV-9, or 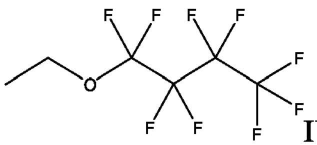 IV-10.

In some embodiments, the electrolyte solution further includes a lithium salt additive, and the lithium salt additive includes at least one of the following lithium salts: lithium bistrifluoromethanesulfonimide LiTFSI, lithium tetrafluoroborate $LiBF_4$, lithium difluoro(oxalato)borate LiDFOB, lithium bis(oxalato)borate LiBOB, or lithium difluorophosphate $LiPO_2F_2$; and based on the mass of the electrolyte solution, a mass percent of the lithium salt additive is 0.01% to 5%.

In some embodiments, the electrolyte solution further includes a compound containing S=O, and the compound containing S=O includes at least one of the following compounds:

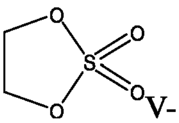 V-1, 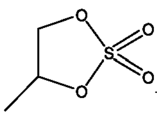 V-2, 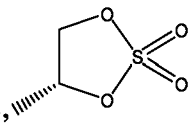 V-3,

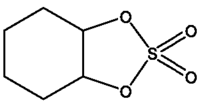 V-4, 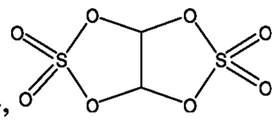 V-5, 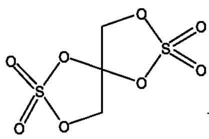 V-6,

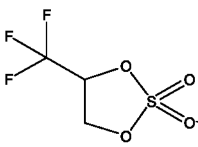 V-7, 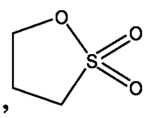 V-8, 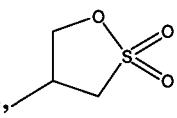 V-9,

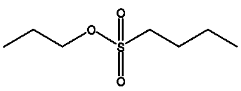 V-10, 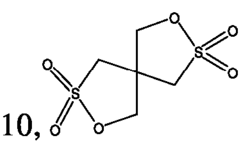 V-11, 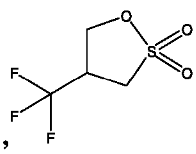 V-12,

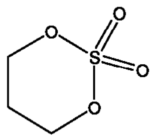 V-13, 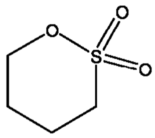 V-14, or 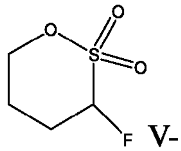 V-15;

and

based on the total mass of the electrolyte solution, a mass percent of the compound containing S=O is 0.2% to 6%.

In another embodiment, this application provides an electrochemical device, including a positive electrode, a negative electrode, a separator, and the electrolyte solution according to the embodiment of this application.

In some embodiments, the electrochemical device includes an electrode assembly and an outer packaging bag layer, the electrochemical device has a length of $L_1$ mm in a direction of tabs extending from the outer packaging bag layer, the electrode assembly has a length of $L_2$ mm in the direction of the tabs extending from the outer packaging bag layer, and $L_1 - L_2$ is E, where $2.2 \leq E \leq 5.5$.

In another embodiment, this application provides an electronic device, including the electrochemical device according to the embodiment of this application.

The electrochemical device provided according to the embodiment of this application has improved high-temperature cycle performance. The reason may be that due to the fact that a linear ester compound represented by the first compound has inherently superior oxidation resistance and is less reactive on the positive electrode side, but it is less stable on the negative electrode, causing a decline in performance of the electrochemical device. The combined use of specific contents of the first compound and the fluorine-containing cyclic carbonate represented by Formula I in the electrolyte solution can passivate the negative electrode, reduce consumption of active lithium, improve a cathode electrolyte interface and an anode electrolyte interface, and significantly improve the high-temperature cycle performance of the electrochemical device.

The additional aspects and advantages of the embodiments of this application may be partially described and shown in the subsequent description or illustrated by the implementation of the embodiments of this application.

## BRIEF DESCRIPTION OF DRAWINGS

The following outlines drawings to be used in the description of embodiments of this application or the prior art to facilitate describing the embodiments of this application. Evidently, the drawings outlined below merely illustrate part of the embodiments of this application. A person skilled in the art may still derive drawings of other embodiments from structures shown in such drawings without making any creative efforts.

Figure shows a schematic structural diagram of a lithium-ion battery according to this application.

## DETAILED DESCRIPTION

Embodiments of this application will be described in detail below. The embodiments of this application are not to be construed as a limitation on this application.

A quantity, a ratio, or another numerical value herein is expressed in the format of a range. Understandably, such a range format is set out for convenience and brevity, and needs to be flexibly understood to include not only the numerical values explicitly specified and defined by the range, but also all individual numerical values or sub-ranges covered in the range as if each individual numerical value and each sub-range were explicitly specified.

In specific implementations and claims, a list of items linked by the terms such as "one of", "one thereof", "one type of", or other similar terms may mean any one of the listed items. For example, if items A and B are listed, the phrase "one of A and B" means: A alone; or B alone. In another example, if items A, B, and C are listed, the phrase "one of A, B, and C" means: A alone; B alone; or C alone. The item A may include a single component or a plurality of components. Item B may include a single component or a plurality of components. Item C may include a single component or a plurality of components.

In specific implementations and claims, a list of items linked by the terms such as "at least one of", "at least one thereof', "at least one type of", or other similar terms may mean any combination of the listed items. For example, if items A and B are listed, the phrase "at least one of A and B" means: A alone; B alone; or both A and B. In another example, if items A, B, and C are listed, the phrase "at least one of A, B, and C" means: A alone; B alone; C alone; A and B (excluding C); A and C (excluding B); B and C (excluding A); or all of A, B, and C. Item A may include a single component or a plurality of components. Item B may include a single component or a plurality of components. Item C may include a single component or a plurality of components.

As used herein, the term "alkyl" is expected to be a linear saturated hydrocarbon structure having 1 to 20 carbon atoms. "Alkyl" is also expected to be a branched or cyclic hydrocarbon structure having 3-20 carbon atoms. When an alkyl

having a specific carbon number is designated, all geometric isomers having that carbon number are expected to be covered. Therefore, e.g., "butyl" is meant to include n-butyl, sec-butyl, isobutyl, tert-butyl, and cyclobutyl; "propyl" includes n-propyl, isopropyl, and cyclopropyl. Examples of alkyl include, but are not limited to, methyl, ethyl, n-propyl, isopropyl, cyclopropyl, n-butyl, isobutyl, sec-butyl, tert-butyl, cyclobutyl, n-pentyl, isopentyl, neopentyl, cyclopentyl, methylcyclopentyl, ethylcyclopentyl, n-hexyl, isohexyl, cyclohexyl, n-heptyl, octyl, cyclopropyl, cyclobutyl, norbornyl, and the like.

As used herein, the term "halogen" may be F, Cl, Br, or I.

**Electrolyte solution**

This application provides an electrolyte solution, where the electrolyte solution includes:

a fluorine-containing cyclic carbonate represented by Formula I,

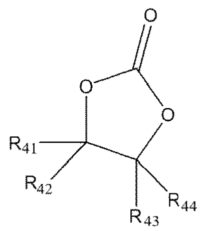
Formula I,

where $R_{41}$, $R_{42}$, $R_{43}$ and $R_{44}$ are each independently F, or substituted or unsubstituted $C_1$ to $C_3$ alkyl; and when substitution is performed, substituent groups are each independently halogen; where at least one of $R_{41}$, $R_{42}$, $R_{43}$ and $R_{44}$ includes F; and

a first compound, including at least one of a compound of Formula II and a compound of Formula III:

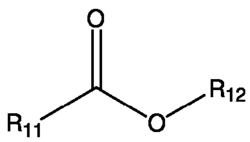
Compound of Formula II

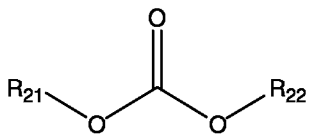
Compound of Formula III,

where $R_{11}$, $R_{12}$, $R_{21}$ and $R_{22}$ are each independently $C_1$ to $C_{10}$ alkyl; and

based on a total mass of the electrolyte solution, a mass percent of the first compound is A%, and a mass percent of the fluorine-containing cyclic carbonate represented by Formula I is B%, where A and B satisfy: $40 \leq A \leq 80$, and $3 \leq A/B \leq 11$.

The applicant finds that the combined use of specific contents of the first compound and the fluorine-containing cyclic carbonate represented by Formula I in the electrolyte solution can significantly improve high-temperature cycle performance of an electrochemical device. Not subject to any theoretical constraints, this may be due to the fact that the first compound (which includes at least one of the compound of Formula II and the compound of Formula III) can stay away from a cathode electrolyte interface and has superior oxidation resistance, which makes the cathode electrolyte interface stable, but such a compound is prone to reacting at a negative electrode and continuously consuming active lithium; and the fluorine-containing cyclic carbonate can be preferentially reduced to form a passivation layer at the negative electrode to reduce the consumption of the active lithium at the negative electrode, but it is prone to getting close to a surface of the negative electrode and reacting at the negative electrode for dehydrogenation to form HF, which continuously etches the cathode electrolyte interface. The fluorine-containing cyclic carbonate and the first compound may be used in combination and in a controlled content relationship to improve both the cathode electrolyte interface and an anode electrolyte interface. When a ratio of the mass percent of A% of the first compound to the mass percent of B% of the fluorine-containing cyclic carbonate in the electrolyte solution is too low (A/B is less than 3), the fluorine-containing cyclic carbonate plays a dominant role in the reaction of dehydrogenation at a positive electrode to produce HF; and when the ratio of the mass percent of A% of the first compound in the electrolyte solution to the mass percent of B% of the fluorine-containing cyclic carbonate is too large (A/B is greater than 11), the first compound plays a dominant role in the continuous reaction of consuming the active lithium at the negative electrode, both of which will deteriorate the performance of the electrochemical device. When A/B is controlled within a range of 3 to 11 and A is controlled within a range of 40 to 80, the reactions at the cathode electrolyte interface and the anode electrolyte interface are equilibrated, thereby significantly improving the

cycle performance, especially the high-temperature cycle performance, of the electrochemical device.

For Formula I, in some embodiments, $R_{41}$ and $R_{42}$ are each independently F, or optionally F-substituted methyl, ethyl, or propyl.

In some embodiments, $R_{11}$, $R_{12}$, $R_{21}$ and $R_{22}$ are each independently $C_1$ to $C_9$ alkyl, $C_1$ to $C_8$ alkyl, $C_1$ to $C_7$ alkyl, $C_1$ to $C_6$ alkyl, $C_1$ to $C_5$ alkyl, $C_1$ to $C_4$ alkyl, $C_1$ to $C_3$ alkyl, or $C_1$ to $C_2$ alkyl.

In some embodiments, A is 40, 45, 50, 55, 60, 60.5, 65, 70, 72.5, 75, 80, or a value falling within a range formed by any two of these values.

In some embodiments, 4 <_ A/B ≤ 9. When the ratio A/B of the mass percent of A% of the first compound to the mass percent of B% of the fluorine-containing cyclic carbonate represented by Formula I in the electrolyte solution satisfies the above range, the high-temperature cycle performance of the electrochemical device is further improved.

In some embodiments, A/B is 3, 4, 5, 6, 7, 8, 9, 10, 11, or a value falling within a range formed by any two of these values.

In some embodiments, the electrolyte solution further includes a second compound, and the second compound includes at least one of ethylene carbonate or propylene carbonate.

In some embodiments, based on the total mass of the electrolyte solution, a mass percent of the second compound is C%, where $C \leq 45$. In some embodiments, $C \leq 15$. In some embodiments, $C < 12$. In some embodiments, $C < 8$. In some embodiments, C is 1, 3, 5, 7, 9, 11, 13, 15, 20, 25, 30, 35, 35.5, 40, 42.5, 45, or a value falling within a range formed by any two of these values.

The second compound is prone to getting close to the cathode electrolyte interface and undergoing an oxidation reaction, which is unfavorable to stability of the positive electrode at a high voltage and thus deteriorates performance. However, the second compound has an excellent ability to dissociate a lithium salt. When the electrolyte solution includes the second compound having the above content, the high-temperature cycle performance of the electrochemical device is further improved.

In some embodiments, $5 \leq B \leq 25$. In some embodiments, $4 \leq B \leq 17.5$. In some embodiments, B is 5, 7, 9, 11, 13, 15, 17.5, 20, 23, 25, or a value falling within a range formed by any two of these values. When the mass percent of B% of the fluorine-containing cyclic carbonate represented by Formula I in the electrolyte solution satisfies the above range, the high-temperature cycle performance of the electrochemical device is further improved.

In some embodiments, the electrolyte solution further includes a fluoroether compound represented by Formula IV:

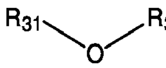 Formula IV,

where $R_{31}$ and $R_{32}$ are each independently selected from substituted or unsubstituted $C_1$ to $C_8$ alkyl or -R'-O-R";

R' is selected from substituted or unsubstituted $C_1$ to $C_8$ alkylidene;

R" is selected from substituted or unsubstituted $C_1$ to $C_8$ alkyl;

when substitution is performed, substituent groups are each independently halogen; and

at least one of $R_{31}$ and $R_{32}$ is substituted by F.

In some embodiments, R' is selected from unsubstituted or halogen-substituted $C_1$ to $C_8$ alkylidene, $C_1$ to $C_7$ alkylidene, $C_1$ to $C_6$ alkylidene, $C_1$ to $C_5$ alkylidene, $C_1$ to $C_4$ alkylidene, $C_1$ to $C_3$ alkylidene, or $C_1$ to $C_2$ alkylidene.

In some embodiments, $R_{31}$, $R_{32}$ and R" are each independently selected from unsubstituted or halogen-substituted $C_1$ to $C_8$ alkyl, $C_1$ to $C_7$ alkyl, $C_1$ to $C_6$ alkyl, $C_1$ to $C_5$ alkyl, $C_1$ to $C_4$ alkyl, $C_1$ to $C_3$ alkyl, or $C_1$ to $C_2$ alkyl.

The applicant finds that the addition of the fluoroether compound represented by Formula IV into the electrolyte solution including the first compound and the fluorine-containing cyclic carbonate represented by Formula I can further improve oxidation resistance, and in addition, the fluoroether compound represented by Formula IV participates in the formation of a cathode electrolyte interface (CEI) film, thereby further improving the high-temperature cycle performance of the electrochemical device.

In some embodiments, based on the total mass of the electrolyte solution, a mass percent of the fluoroether compound represented by Formula IV is D%, and D satisfies $5 \leq D \leq 50$. In some embodiments, $5 \leq D \leq 30$. In some embodiments, D is 5, 10, 15, 20, 25, 30, 35, 40, 45, 50, or a value falling within a range formed by any two of these values. When the mass percent of D% of the fluoroether compound represented by Formula IV in the electrolyte solution satisfies the above range, the high-temperature cycle performance of the electrochemical device is further improved.

In some embodiments, A, B and D satisfy: 50 < (A+B+D) <_ 90. In some embodiments, 60 < (A+B+D) <_ 80. In some embodiments, a value of A+B+D is 50, 55, 60, 65, 70, 72, 72.5, 75, 80, 85, 87.5, 90, or a value falling within a range formed by any two of these values. When the sum of the mass percent of A% of the first compound in the electrolyte solution, the mass percent of B% of the fluorine-containing cyclic carbonate represented by Formula I, and the mass percent of D% of the fluoroether compound represented by Formula IV satisfies the above range, the high-temperature cycle performance of the electrochemical device is further improved.

In some embodiments, the compound of Formula II includes at least one of the following compounds: methyl formate, ethyl formate, methyl acetate, ethyl acetate, propyl acetate, methyl propionate, ethyl propionate, or propyl propionate.

In some embodiments, the compound of Formula III includes at least one of the following compounds: dimethyl carbonate, diethyl carbonate, or ethyl methyl carbonate.

In some embodiments, the fluorine-containing cyclic carbonate represented by Formula I includes at least one of the following compounds:

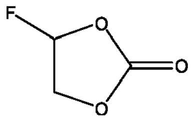 I-1, 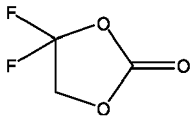 I-2, 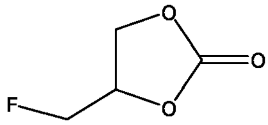 I-3,

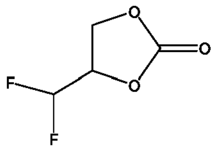 I-4, 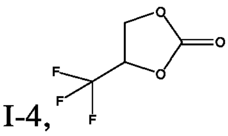 I-5, 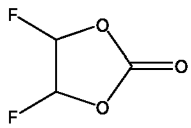 I-6,

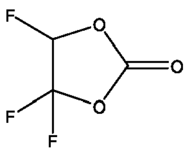 I-7, 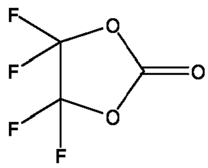 I-8, 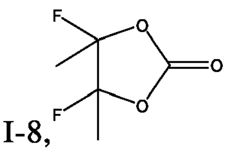 I-9,

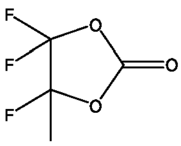 I-10, 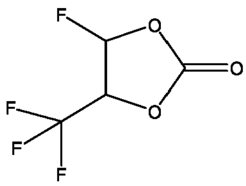 I-11, 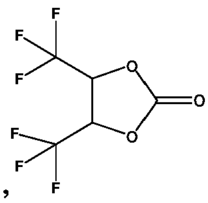 I-12.

In some embodiments, the fluoroether compound represented by Formula IV includes at least one of the following compounds:

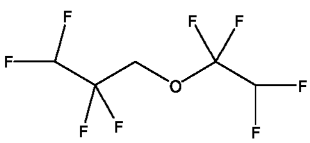 IV-1, 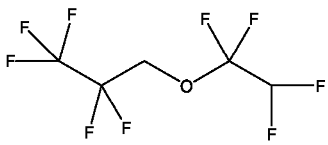 IV-2,

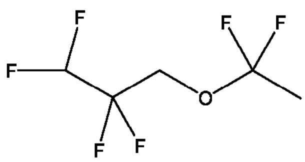 IV-3, 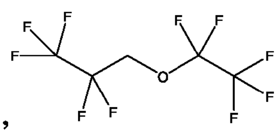 IV-4,

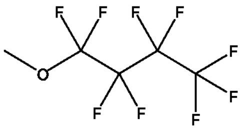 IV-5, 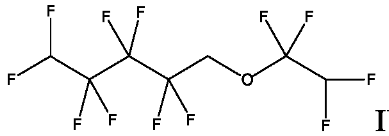 IV-6,

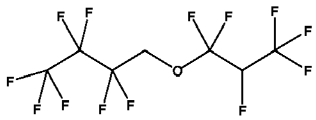 IV-7, 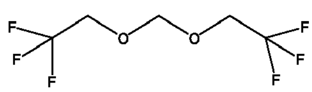 IV-8,

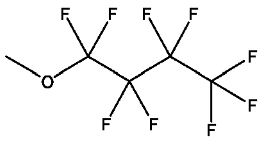 IV-9, or 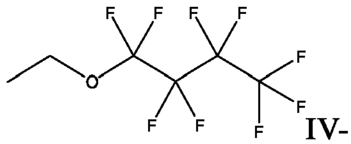 IV-10.

In some embodiments, the electrolyte solution further includes a lithium salt additive, and the lithium salt additive includes at least one of the following lithium salts: lithium bistrifluoromethanesulfonimide LiTFSI, lithium tetrafluoroborate $LiBF_4$, lithium difluoro(oxalato)borate LiDFOB, lithium bis(oxalato)borate LiBOB, or lithium difluorophosphate $LiPO_2F_2$. When the electrolyte solution includes both the first compound and the fluorine-containing cyclic carbonate, and the mass percent of A% of the first compound and the mass percent of B% of the fluorine-containing cyclic carbonate represented by Formula I satisfy the requirements of this application, the addition of the above lithium salt additive into the electrolyte solution can further improve the high-temperature cycle performance of the electrochemical device. The reason may be due to the fact that the lithium salt additive has superior interface film stability, thereby improving the cycle performance of the electrochemical device.

In some embodiments, based on the total mass of the electrolyte solution, a mass percent of the lithium salt additive is 0.01% to 10%. In some embodiments, the mass percent of the lithium salt additive is 0.2 % to 5%. In some embodiments, the mass percent of the lithium salt additive is 0.01%, 0.1%, 0.2%, 1%, 2%, 3%, 4%, 5%, 6%, 7%, 8%, 9%, 10%, or a value falling within a range formed by any two of these values.

In some embodiments, the electrolyte solution further includes a compound containing S=O, and the compound containing S=O includes at least one of the following compounds:

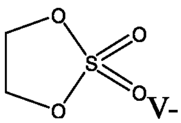 V-1, 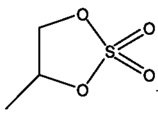 V-2, 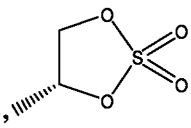 V-3,

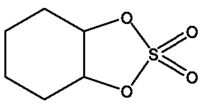 V-4, 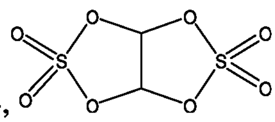 V-5, 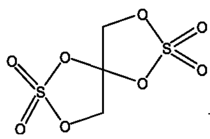 V-6,

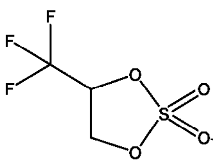 V-7, 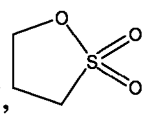 V-8, 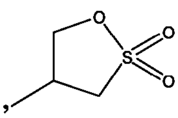 V-9,

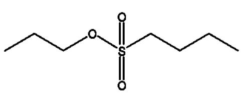 V-10, 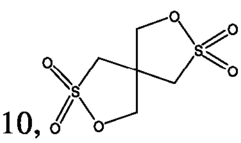 V-11, 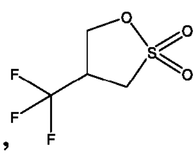 V-12,

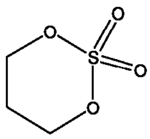 V-13, 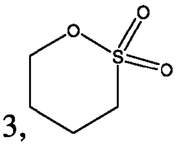 V-14, or 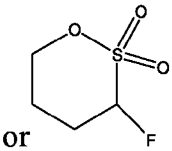 V-15.

The applicant finds that after the compound containing S=O is added into the electrolyte solution including the first compound and the fluorine-containing cyclic carbonate, a low-impedance interface can be formed, thereby further improving the high-temperature cycle performance of the electrochemical device.

In some embodiments, based on the total mass of the electrolyte solution, a mass percent of the compound containing S=O is 0.2% to 6%.

In some embodiments, based on the total mass of the electrolyte solution, the mass percent of the compound containing S=O is 0.2%, 1%, 0.2%, 0.2%, 0.2%, 0.2%, 6%, or a value falling within a range formed by any two of these values.

In some embodiments, the electrolyte solution includes a lithium salt. In some embodiments, the lithium salt includes, but is not limited to: at least one of lithium hexafluorophosphate ($LiPF_6$) and lithium bisfluorosulfonimide (LiFSI) salts. In some embodiments, based on the total mass of the electrolyte solution, a mass percent of the lithium salt in the electrolyte solution is 8% to 25%. In some embodiments, based on the total mass of the electrolyte solution, the mass percent of the lithium salt in the electrolyte solution is 8%, 10%, 12%, 15%, 18%, 20%, 22%, 25%, or a value falling within a range formed by any two of these values.

In some embodiments, the electrolyte solution includes a sodium salt. In some embodiments, the sodium salt includes at least one of sodium hexafluorophosphate $NaPF_6$, sodium bis(trifluoromethanesulfonyl)imide NaTFSI, and sodium bis(fluorosulfonyl)imide NaFSI.

## Negative electrode

A material, constitution, and manufacturing method of the negative electrode used in the electrochemical device of this application may include any technology disclosed in the prior art. In some embodiments, the negative electrode is a negative electrode recited in U.S. patent application No. US9812739B, which is incorporated herein by reference in its entirety.

In some embodiments, the negative electrode includes a current collector and a negative active material layer located on the current collector. A negative active material includes a material that enables reversible intercalation/deintercalation of lithium ions. In some embodiments, the material that enables reversible intercalation/deintercalation of the lithium ions includes a carbon material. In some embodiments, the carbon material may be any carbon-based negative active material that is commonly used in a lithium-ion rechargeable battery. In some embodiments, the carbon material includes, but is not limited to: crystalline carbon, amorphous carbon, or a mixture thereof. The crystalline carbon may be amorphous, sheet-shaped, small sheet-shaped, spherical or fibrous natural graphite or artificial graphite. The amorphous carbon may be soft carbon, hard carbon, mesophase pitch carbide, calcined coke, and the like.

In some embodiments, the negative active material layer includes a negative active material. In some embodiments, the negative active material includes, but is not limited to: lithium metal, structured lithium metal, natural graphite, artificial graphite, mesocarbon microbeads (MCMB), hard carbon, soft carbon, silicon, a silicon-carbon complex, a Li-Sn alloy, a Li-Sn-O alloy, Sn, SnO, $SnO_2$, lithiated $TiO_2$-$Li_4Ti_5O_{12}$ of a spinel structure, a Li-Al alloy, or any combination thereof.

When the negative electrode includes a silicon-carbon compound, based on a total mass of the negative active material, silicon: carbon = 1: 10 to 10: 1, and a median particle diameter Dv50 of the silicon-carbon compound is 0.1 $\mu$m to 100 $\mu$m. When the negative electrode includes an alloy material, the negative active material layer may be formed by an evaporation method, a sputtering method, a plating method, and the like. When the negative electrode includes lithium metal, the negative active material layer is formed, for example, with a ball joint-shaped conductive skeleton and metal particles dispersed in the conductive skeleton. In some embodiments, the ball joint-shaped conductive skeleton may have a porosity of 5% to 85%. In some embodiments, a protective layer may further disposed on the lithium metal negative active material layer.

In some embodiments, the negative active material layer may include a binder, and optionally includes a conductive material. The binder improves bonding between particles of the negative active material and bonding between the negative active material and the current collector. In some embodiments, the binder includes, but is not limited to: polyvinyl alcohol, carboxymethyl cellulose, hydroxypropyl cellulose, diacetyl cellulose, polyvinyl chloride, carboxylated polyvinyl chloride, polyvinyl fluoride, a polymer containing ethylene oxide, polyvinylpyrrolidone, polyurethane, polytetrafluoroethylene, poly (1,1-difluoroethylene), polyethylene, polypropylene, styrene-butadiene rubber, acrylic styrene-butadiene rubber, epoxy resin, nylon, or the like.

In some embodiments, the conductive material includes, but is not limited to: a carbon-based material, a metal-based material, a conductive polymer, or a mixture thereof. In some embodiments, the carbon-based material is selected from natural graphite, artificial graphite, carbon black, acetylene black, Ketjen black, carbon fibers, or any combination thereof. In some embodiments, the metal-based material is selected from metal powder, metal fibers, copper, nickel, aluminum, and silver. In some embodiments, the conductive polymer is a polyphenylene derivative.

In some embodiments, the current collector includes, but is not limited to: copper foil, nickel foil, stainless steel foil, titanium foil, foamed nickel, foamed copper, a polymer substrate coated with a conductive metal, and a combination thereof.

The negative electrode may be prepared by a preparation method known in the art. For example, the negative electrode may be obtained by the following method: mixing the active material, the conductive material and the binder in a solvent to prepare an active material composition, and coating the current collector with the active material composition. In some embodiments, the solvent may include, but is not limited to, water, and the like.

**Positive electrode**

A material of the positive electrode used in the electrochemical device of this application may be prepared by using a material, a constitution, and a manufacturing method known in the art. In some embodiments, the positive electrode of this application may be prepared through a technology recited in US9812739B, which is incorporated herein by reference in its entirety.

In some embodiments, the positive electrode includes a current collector and a positive active material layer located on the current collector. A positive active material includes at least one lithiated intercalation compound that enables reversible intercalation and deintercalation of lithium ions. In some embodiments, the positive active material includes a composite oxide. In some embodiments, the composite oxide contains lithium and at least one element selected from cobalt, manganese and nickel.

In some embodiments, the positive active material is selected from lithium cobalt oxide ($LiCoO_2$), a lithium nickel-cobalt-manganese (NCM) ternary material, lithium ferrous phosphate ($LiFePO_4$), lithium manganese oxide ($LiMn_2O_4$), sodium nickel oxide ($NaNiO_2$), sodium metal oxide, e.g., sodium manganese oxide ($NaMnO_2$), sodium iron oxide ($NaFeO_2$), sodium cobalt oxide ($NaCoO_2$), polyanions $NaM_x[(XO)_y]_z$, Prussian blue ($Fe_4[Fe(CN)_6]_3$), or any combination thereof.

In some embodiments, the positive active material may have a coating layer on its surface, or may be mixed with another compound having a coating layer. The coating layer may include at least one coating element compound selected from an oxide of a coating element, a hydroxide of a coating element, an oxyhydroxide of a coating element, an oxycarbonate of a coating element, and a hydroxyl carbonate of a coating element. The compound for the coating layer may be amorphous or crystalline.

In some embodiments, the coating element contained in the coating layer may include Mg, Co, K, Na, Ca, Si, Ti, V, Sn, Ge, Ga, B, As, Zr, F, or any combination thereof. The coating layer may be applied by any method as long as the method does not adversely affect the performance of the positive active material. For example, the method may include any coating method such as spray coating and dipping known in the art.

The positive active material layer further includes a binder, and optionally includes a conductive material. The binder improves bonding between particles of the positive active material and further improves bonding between the positive active material and the current collector.

In some embodiments, the binder includes, but is not limited to: polyvinyl alcohol, hydroxypropyl cellulose, diacetyl cellulose, polyvinyl chloride, carboxylated polyvinyl chloride, polyvinyl fluoride, a polymer containing ethylene oxide, polyvinylpyrrolidone, polyurethane, polytetrafluoroethylene, poly (1,1-difluoroethylene), polyethylene, polypropylene, styrene-butadiene rubber, acrylic styrene-butadiene rubber, epoxy resin, nylon, or the like.

In some embodiments, the conductive material includes, but is not limited to: a carbon-based material, a metal-based material, a conductive polymer, and a mixture thereof. In some embodiments, the carbon-based material is selected from natural graphite, artificial graphite, carbon black, acetylene black, Ketjen black, carbon fibers, or any combination thereof. In some embodiments, the metal-based material is selected from metal powder, metal fibers, copper, nickel, aluminum, and silver. In some embodiments, the conductive polymer is a polyphenylene derivative.

In some embodiments, the current collector may be, but is not limited to, aluminum.

The positive electrode may be prepared by a preparation method known in the art. For example, the positive electrode may be obtained by the following method: mixing the active material, the conductive material and the binder in a solvent to prepare an active material composition, and coating the current collector with the active material composition. In some embodiments, the solvent may include, but is not limited to, N-methyl-pyrrolidone, and the like.

In some embodiments, the positive electrode is made by forming a positive electrode material on the current collector using the positive active material layer including lithium transition metal compound powder and the binder.

In some embodiments, the positive active material layer may be typically made by the following operation: dry-mixing the positive active material and the binder (the conductive material, a thickening agent and the like used as needed)

to form a shape of sheet, pressing down the obtained sheet on the positive current collector, or dissolving or dispersing the materials in a liquid medium to form a shape of slurry, and coating the positive current collector with the slurry and performing drying. In some embodiments, the materials of the positive active material layer are any materials known in the art.

**Separator**

In some embodiments, the electrochemical device of this application is provided with a separator between the positive electrode and the negative electrode to prevent a short circuit. There is no particular limitation on the material and shape of the separator used in the electrochemical device of this application, which may be of any technology disclosed in the prior art. In some embodiments, the separator includes a polymer, an inorganic compound or the like formed from a material that is stable to the electrolyte solution of this application.

For example, the separator may include a substrate layer and a surface treatment layer. The substrate layer is a non-woven fabric, a film or a composite film of a porous structure, and a material of the substrate layer is selected from at least one of polyethylene, polypropylene, polyethylene terephthalate and polyimide. Specifically, a polypropylene porous film, a polyethylene porous film, a polypropylene non-woven fabric, a polyethylene non-woven fabric or a polypropylene-polyethylene-polypropylene porous composite film may be used.

The surface treatment layer is disposed on at least one surface of the substrate layer. The surface treatment layer may be a polymer layer or an inorganic compound layer, or a layer formed by mixing the polymer and the inorganic compound. A thickness ratio of a thickness of the substrate layer to a thickness of the surface treatment layer is 1:1 to 20:1. The thickness of the substrate layer is 4 μm to 14 μm, and the thickness of the surface treatment layer is 1 μm to 5 μm.

The inorganic compound layer include an inorganic particle and a binder. The inorganic particle is selected from one or a combination of more of aluminum oxide, silicon oxide, magnesium oxide, titanium oxide, hafnium dioxide, tin oxide, cerium dioxide, nickel oxide, zinc oxide, calcium oxide, zirconium oxide, yttrium oxide, silicon carbide, boehmite, aluminum hydroxide, magnesium hydroxide, calcium hydroxide, and barium sulfate. The binder is selected from one or a combination of more of polyvinylidene fluoride, a vinylidene fluoride-hexafluoropropylene copolymer, polyamide, polyacrylonitrile, polyacrylate ester, polyacrylic acid, polyacrylate salt, polyvinylpyrrolidone, polyvinyl ether, polymethyl methacrylate, polytetrafluoroethylene, and polyhexafluoropropylene. The polymer layer includes a polymer, and a material of the polymer includes at least one of polyamide, polyacrylonitrile, an acrylate polymer, polyacrylic acid, polyacrylate salt, polyvinylpyrrolidone, polyvinyl ether, polyvinylidene fluoride, or poly(vinylidene fluoride-hexafluoropropylene).

**Electrochemical device**

This application provides an electrochemical device, including the positive electrode, the negative electrode, the separator and the electrolyte solution according to this application.

In some embodiments, the electrochemical device includes an electrode assembly and an outer packaging bag layer. The positive electrode, the separator and the negative electrode are stacked or stacked and wound to form the electrode assembly. The electrochemical device has a length of $L_1$ mm in a direction of tabs extending from the outer packaging bag layer, the electrode assembly has a length of $L_2$ mm in the direction of the tabs extending from the outer packaging bag layer, and $L_1 - L_2$ is E, where $2.2 \leq E \leq 5.5$. In some embodiments, E is 2.2, 2.5, 3, 3.5, 4, 4.5, 5, 5.5, or a value falling within a range formed by any two of these values. When the electrolyte solution includes both the first compound and the fluorine-containing cyclic carbonate, and the mass percent of A% of the first compound and the mass percent of B% of the fluorine-containing cyclic carbonate represented by Formula I satisfy the requirements of this application, and when the difference E between the length of the electrochemical device and the length of the electrode assembly satisfies the above range, the energy density of the electrochemical device is further increased while ensuring the high-temperature cycle performance.

In some embodiments, the electrochemical apparatus of this application includes, but is not limited to: all kinds of primary batteries, secondary batteries or capacitors. In some embodiments, the electrochemical apparatus is a lithium secondary battery. In some embodiments, the lithium secondary battery includes, but is not limited to, a lithium metal secondary battery, a lithium-ion secondary battery, a lithium polymer secondary battery, or a lithium-ion polymer secondary battery. In some embodiments, the electrochemical apparatus is a sodium-ion battery.

**Electronic device**

This application provides an electronic device, including the electrochemical device according to this application.

In some embodiments, the electronic device includes, but is not limited to, a notebook computer, a pen-input computer, a mobile computer, an electronic book player, a portable phone, a portable fax machine, a portable copier, a

portable printer, a headphone, a video recorder, a liquid crystal television, a hand-held cleaner, a portable CD machine, a mini disc, a transceiver, an electronic organizer, a calculator, a memory card, a portable audio recorder, a radio, a backup power supply, a motor, an automobile, a motorcycle, a power bicycle, a bicycle, a lighting appliance, a toy, a game machine, a clock, an electric tool, a flash light, a camera, a large household storage battery, a lithium-ion capacitor, etc.

A lithium-ion battery is used as an example and the preparation of the lithium-ion battery is illustrated in combination with specific embodiments. A person skilled in the art should understand that a preparation method described in this application is only an example, and any other suitable preparation methods are within the scope of this application.

## Embodiment

Performance evaluation is performed based on an embodiment and a comparative embodiment of a lithium-ion battery according to this application in the following descriptions.

## I. Preparing a lithium-ion battery

Preparing a positive electrode: Mixing a positive active material $LiCoO_2$, conductive carbon black (Super P) as a conductive agent, and polyvinylidene difluoride (PVDF) as a binder at a weight ratio of 97:1.4:1.6, adding the mixture into N-methyl-pyrrolidone (NMP) for full stirring and mixing to form a uniform positive electrode slurry, where a solid content of the positive electrode slurry is 72 wt%. Coating a positive current collector aluminum foil with the positive electrode slurry uniformly, and performing drying, cold-pressing and slitting to obtain the positive electrode.

Preparing a negative electrode: Mixing artificial graphite as a negative active material, conductive carbon black (Super P) as a conductive agent, sodium carboxymethyl cellulose as a thickening agent, styrene-butadiene rubber as a binder at a wight ratio of 96.4:1.5:0.5:1.6, and adding deionized water for uniform stirring to obtain a negative electrode slurry, where a solid content of the negative electrode slurry is 54 wt%. Coating a negative current collector copper foil with the negative electrode slurry, and performing drying, cold-pressing and slitting to obtain the negative electrode.

Preparing a separator: Selecting a 9-$\mu$m thick polyethylene (PE) porous film as a separator substrate, coating a surface of one side of the separator substrate with a 2-$\mu$m thick heat-resistant layer (where in a heat-resistant layer slurry, based on a total mass of aluminum oxide and a binder PVDF, a mass percent of the aluminum oxide is 95%, and a mass percent of PVDF is 5%), then coating two sides with a polyvinylidene difluoride (PVDF) slurry, and drying to obtain the final separator.

Preparing an electrolyte solution: Under a dry argon environment, mixing a solvent (EC and/or PC) according to a corresponding ratio uniformly to obtain a mixed solvent, then dissolving a fully dried lithium salt and lithium salt additive (if present) in the foregoing mixed solvent, and then adding other corresponding additives (the fluorine-containing cyclic carbonate represented by Formula I, the first compound, the second compound, the fluoroether compound represented by Formula IV, and/or the compound containing S=O) for uniform mixing to obtain the electrolyte solution. Contents of components of the electrolyte solution are shown in the following tables, the contents of components are mass percents calculated based on a mass of the electrolyte solution, and a sum of the contents of the components is 100%.

Preparing a lithium-ion battery: Stacking the positive electrode, the separator, and the negative electrode in sequence, putting the separator between the positive electrode and the negative electrode to play a role of separation, and winding the stacked structure to obtain an electrode assembly. Putting the electrode assembly into an outer aluminum-plastic film package, removing water at 80°C, injecting the foregoing electrolytic solution, sealing the package, and performing steps such as static standing, chemical formation, capacity grading, degassing, edge trimming, shaping, and aging to obtain the lithium-ion battery.

## II. Test method for performance of lithium-ion battery

Test method for cycle performance at high temperature of 40°C

Putting the lithium-ion battery into a 40°C thermostat, charging the lithium-ion battery at a constant current of 0.5 C until the voltage reaches 4.52 V, and then charging the lithium-ion battery at a constant voltage of 4.52 V until the current reaches 0.05 C. Subsequently, leaving the lithium-ion battery to stand for 8 hours, and then discharging the lithium-ion battery at a constant current of 0.5 C until the voltage reaches 3.0 V. Subsequently, leaving the lithium-ion battery to stand for 8 hours, and recording an initial discharge capacity at this time as D0, thereby completing one charge-and-discharge cycle. Repeating the foregoing steps to complete 200 charge-and-discharge cycles. Then charging the lithium-ion battery at a constant current of 0.5 C until the voltage reaches 4.5 V, and charging the lithium-ion battery at a constant voltage of 4.5 V until the current reaches 0.05 C. Subsequently, leaving the lithium-ion battery to stand for 8 hours, and then discharging the lithium-ion battery at a constant current of 0.5 C until the voltage reaches 3.0 V. Subsequently, leaving the lithium-ion battery to stand for 8 hours, thereby completing one charge-and-discharge cycle. Repeating the foregoing steps to

complete 200 charge-and-discharge cycles. Recording a remaining discharge capacity after cycling as D1. Calculating a capacity retention rate of the lithium-ion battery by the following formula:

$$\text{Capacity retention rate} = D1/D0 \times 100\%.$$

(2) Test method for cycle performance at high temperature of 45°C

Putting the lithium-ion battery into a 45°C thermostat, charging the lithium-ion battery at a constant current of 0.5 C until the voltage reaches 4.52 V, and then charging the lithium-ion battery at a constant voltage of 4.52 V until the current reaches 0.05 C. Leaving the lithium-ion battery to stand for 5 min, and then discharging the lithium-ion battery at a constant current of 0.5 C until the voltage reaches 3.0 V. Leaving the lithium-ion battery to stand for 5 min, and recording an initial discharge capacity at this time as Y0, thereby completing one charge-and-discharge cycle. Repeating the foregoing steps to complete 500 charge-and-discharge cycles. Recording a remaining discharge capacity after cycling as Y1. Calculating a capacity retention rate of the lithium-ion battery by the following formula:

$$\text{Capacity retention rate} = Y1/Y0 \times 100\%.$$

(3) Measurement method for difference E mm between length of lithium-ion battery and length of electrode assembly

Figure shows a schematic structural diagram of a lithium-ion battery according to this application. The lithium-ion battery includes an outer packaging bag layer 1, an electrode assembly 2, a first tab 3 and a second tab 4. $L_1$ represents a length of the lithium-ion battery in a direction of the tabs extending from the outer packaging bag layer 1; and $L_2$ represents a length of the electrode assembly 2 in the direction of the tabs extending from the outer packaging bag layer 1. A difference E between the lengths of the lithium-ion battery and the electrode assembly is calculated by the following formula: E (mm) = $L_1$ (mm) - $L_2$ (mm). $L_1$ and $L_2$ are measured for five times by taking five points respectively. Average values of five times of measurements of $L_1$ and $L_2$ are found respectively. The average values of $L_1$ and $L_2$ are substituted into the above formula for calculation, and a result is denoted as a final E value.

III. Result of performance test for lithium-ion battery

Table 1 to Table 3, Table 4-1, Table 4-2 and Table 5 show relevant parameters of electrolyte solutions and lithium-ion batteries in embodiments and comparative embodiments. Based on the total mass of the electrolyte solution, the mass percent of A% of the first compound is a sum of a content of A1% of the compound of Formula II and a content of A2% of the compound of Formula III, the mass percent of the fluorine-containing cyclic carbonate represented by Formula I is B%, and the mass percent of the fluoroether compound represented by Formula IV is D%.

Table 1

| | Fluorine-containing cyclic carbonate represented by Formula I | | First compound | | | | A/B | Lithium salt | | Second compound | | Capacity retention rate | |
|---|---|---|---|---|---|---|---|---|---|---|---|---|---|
| | | | Compound of Formula II | | Compound of Formula III | | | | | | | 40°C High-temperature cycle test | 45°C high-temperature cycle test |
| | Ingredients | Content B (%) | Ingredients | Content A1 (%) | Ingredients | Content A2 (%) | | Ingredients | Content (%) | Ingredients | Content C (%) | | |
| Embodiment 1-1 | I-1 | 12 | Ethyl propionate | 40 | / | / | 3.3 | $LiPF_6$ | 12.5 | EC+PC | 15.5+20 | 57.3% | 51.7% |
| Embodiment 1-2 | I-1 | 12 | Propyl propionate | 40 | / | / | 3.3 | $LiPF_6$ | 12.5 | EC+PC | 15.5+20 | 63.5% | 64.1% |
| Embodiment 1-3 | I-1 | 12 | Ethyl acetate | 40 | / | / | 3.3 | $LiPF_6$ | 12.5 | EC+PC | 15.5+20 | 41.0% | 45.2% |
| Embodiment 1-4 | I-1 | 12 | / | / | Diethyl carbonate | 40 | 3.3 | $LiPF_6$ | 12.5 | EC+PC | 15.5+20 | 65.2% | 66.3% |
| Embodiment 1-5 | I-1 | 12 | / | / | Ethyl methyl carbonate | 40 | 3.3 | $LiPF_6$ | 12.5 | EC+PC | 15.5+20 | 61.5% | 59.5% |
| Embodiment 1-6 | I-1 | 12 | propionate | 20 | Diethyl carbonate | 20 | 3.3 | $LiPF_6$ | 12.5 | EC+PC | 15.5+20 | 64.9% | 66.5% |
| Embodiment 1-7 | I-6 | 12 | Propyl propionate | 20 | Diethyl carbonate | 20 | 3.3 | $LiPF_6$ | 12.5 | EC+PC | 15.5+20 | 59.3% | 57.8% |
| Embodiment 1-8 | I-3 | 12 | Propyl propionate | 20 | Diethyl carbonate | 20 | 3.3 | $LiPF_6$ | 12.5 | EC+PC | 15.5+20 | 58.5% | 61.4% |
| Embodiment 1-9 | I-1 | 12 | / | / | Diethyl carbonate | 50 | 5 | $LiPF_6$ | 12.5 | EC+PC | 5.5+20 | 67.1% | 68.9% |
| Embodiment 1-10 | I-1 | 12 | / | / | Diethyl carbonate | 60.5 | 6 | $LiPF_6$ | 12.5 | PC | 15 | 67.7% | 69.3% |
| Embodiment 1-11 | I-1 | 12 | / | / | Diethyl carbonate | 70 | 7 | $LiPF_6$ | 12.5 | PC | 5.5 | 71.6% | 73.6% |
| Embodiment 1-12 | I-1 | 8 | / | / | Diethyl carbonate | 72 | 9 | $LiPF_6$ | 12.5 | PC | 7.5 | 70.2% | 73.6% |
| Embodiment 1-13 | I-1 | 7.5 | / | / | Diethyl carbonate | 80 | 10.7 | $LiPF_6$ | 12.5 | / | / | 71.3% | 71.5% |

(continued)

| | Fluorine-containing cyclic carbonate represented by Formula I | | First compound | | | | A/B | Lithium salt | | Second compound | | Capacity retention rate | |
|---|---|---|---|---|---|---|---|---|---|---|---|---|---|
| | | | Compound of Formula II | | Compound of Formula III | | | | | | | 40°C High-temperature cycle test | 45°C high-temperature cycle test |
| | Ingredients | Content B (%) | Ingredients | Content A1 (%) | Ingredients | Content A2 (%) | | Ingredients | Content (%) | Ingredients | Content C (%) | | |
| Embodiment 1-14 | I-1 | 15 | / | / | Diethyl carbonate | 72.5 | 4.67 | $LiPF_6$ | 12.5 | / | / | 72.2% | 72.3% |
| Embodiment 1-15 | I-1 | 4 | / | / | Diethyl carbonate | 40 | 10 | $LiPF_6$ | 12.5 | EC+PC | 22.5+20 | 61.6% | 63.6% |
| Embodiment 1-16 | I-1 | 17.5 | / | / | Diethyl carbonate | 70 | 4 | $LiPF_6$ | 12.5 | / | / | 71.9% | 72.3% |
| Comparative Embodiment 1 | I-1 | 10 | Propyl propionate | 37.5 | / | / | 3.75 | $LiPF_6$ | 12.5 | EC+PC | 20+20 | 27.5% | 24.3% |
| Comparative Embodiment 2 | / | / | Propyl propionate | 47.5 | / | / | / | $LiPF_6$ | 12.5 | EC+PC | 20+20 | 20.1% | 19.7% |
| Comparative Embodiment 3 | I-1 | 3 | Propyl propionate | 44.5 | / | / | 14.8 | $LiPF_6$ | 12.5 | EC+PC | 20+20 | 25.3% | 26.5% |

"/" indicates that the material and parameter are not present.

As can be seen from Table 1, electrolyte solutions in Embodiment 1-1 to Embodiment 1-16 each include the first compound and the fluorine-containing cyclic carbonate represented by Formula I, and the mass percent of B% of the fluorine-containing cyclic carbonate represented by Formula I and the mass percent of A% of the first compound satisfy $40 \leq A \leq 80$ and $3 \leq A/B \leq 11$. Thus, lithium-ion batteries in Embodiment 1-1 to Embodiment 1-16 have significantly improved high-temperature cycle performance.

Comparative Embodiment 1 includes both the first compound and the fluorine-containing cyclic carbonate represented by Formula I. However, the mass percent of the first compound is less than 40%. The Comparative Embodiment 1 has significantly deteriorated high-temperature cycle performance.

Comparative Embodiment 2 includes the first compound alone and does not include the fluorine-containing cyclic carbonate represented by Formula I. The Comparative Embodiment 2 has significantly deteriorated high-temperature cycle performance.

Comparative Embodiment 3 includes both the first compound and the fluorine-containing cyclic carbonate represented by Formula I. However, the ratio A/B of the mass percent of A% of the first compound to the mass percent of B% of the fluorine-containing cyclic carbonate represented by Formula I is greater than 11. The Comparative Embodiment 3 has significantly deteriorated high-temperature cycle performance.

The above embodiments and comparative embodiments prove that when the electrolyte solution includes specific contents of the first compound and the fluorine-containing cyclic carbonate represented by Formula I of a specific ratio, the high-temperature cycle performance f the lithium-ion battery can be significantly improved. Especially when the mass percent of B% of the fluorine-containing cyclic carbonate represented by Formula I and the mass percent of A% of the first compound satisfy $4 \leq A/B \leq 9$, the high-temperature cycle performance of the lithium-ion battery is further improved.

Lithium-ion batteries in Embodiment 2-1 to Embodiment 2-7 in Table 2 have the same composition conditions as Embodiment 1-10 except for parameters shown in Table 2.

Table 2

| | Fluorine-containing cyclic carbonate represented by Formula I | | First compound | | | | Second compound | | Lithium salt | | Capacity retention rate | |
|---|---|---|---|---|---|---|---|---|---|---|---|---|
| | | | Compound of Formula II | | Compound of Formula III | | | | | | 40°C high-temperature cycle test | 45°C high-temperature cycle test |
| | Ingredients | Content B (%) | Ingredients | Content A1 (%) | Ingredients | Content A2 (%) | Ingredients | Content C (%) | Ingredients | Content (%) | | |
| Embodiment 1-10 | I-1 | 12 | / | / | Diethyl carbonate | 60.5 | PC | 15 | $LiPF_6$ | 12.5 | 67.7% | 69.3% |
| Embodiment 2-1 | I-1 | 12 | / | / | Diethyl carbonate | 63.5 | PC | 12 | $LiPF_6$ | 12.5 | 69.3% | 71.0% |
| Embodiment 2-2 | I-1 | 12 | / | / | Diethyl carbonate | 67.5 | PC | 8 | $LiPF_6$ | 12.5 | 71.7% | 72.0% |
| Embodiment 2-3 | I-1 | 12 | / | / | Diethyl carbonate | 70 | PC | 5.5 | $LiPF_6$ | 12.5 | 71.6% | 73.6% |
| Embodiment 2-4 | I-1 | 17.5 | / | / | Diethyl carbonate | 70 | / | / | $LiPF_6$ | 12.5 | 71.9% | 72.3% |
| Embodiment 1-2 | I-1 | 12 | Propyl propionate | 40 | / | / | EC+PC | 15.5+20 | $LiPF_6$ | 12.5 | 63.5% | 64.1% |
| Embodiment 2-5 | I-1 | 14.5 | Propyl propionate | 61 | / | / | PC | 12 | $LiPF_6$ | 12.5 | 70.6% | 71.2% |
| Embodiment 2-6 | I-1 | 14.5 | Propyl propionate | 61 | / | / | EC | 12 | $LiPF_6$ | 12.5 | 68.1% | 69.6% |
| Embodiment 2-7 | I-1 | 14.5 | Propyl propionate | 61 | / | / | EC+PC | 6+6 | $LiPF_6$ | 12.5 | 69.5% | 69.9% |

"j" indicates that the material and parameter are not present.

As can be seen from the comparison between Embodiment 1-10, Embodiment 1-11 to Embodiment 1-14, Embodiment 2-1 to Embodiment 2-4 and Embodiment 2-5 to Embodiment 2-7 and Embodiment 1-2, on the basis that the electrolyte solution includes the first compound and the fluorine-containing cyclic carbonate represented by Formula I, and the mass percent of B% of the fluorine-containing cyclic carbonate represented by Formula I and the mass percent of A% of the first compound satisfy $40 \leq A \leq 80$ and $3 \leq A/B \leq 11$, the second compound (EC and/or PC) with a mass percent less than or equal to 12% is added into the electrolyte solution, and the high-temperature cycle performance of the lithium-ion battery is further improved.

In addition, as can be seen from the comparison between Embodiment 1-11 to Embodiment 1-14 and Embodiment 2-2 to Embodiment 2-4 and other embodiments, when the mass percent of the second compound is less than or equal to 8%, the lithium-ion battery has better high-temperature cycle performance.

Lithium-ion batteries in Embodiment 3-1 to Embodiment 3-7 in Table 3 have the same composition conditions as Embodiment 1-10 except for parameters shown in Table 3.

Table 3

| | Fluorine-containing cyclic carbonate represented by Formula I | | First compound | | | | Second compound | | Fluoroether compound represented by Formula IV | | A+B+D | Capacity retention rate | |
|---|---|---|---|---|---|---|---|---|---|---|---|---|---|
| | | | Compound of Formula II | | Compound of Formula III | | | | | | | 40°C high-temperature cycle test | 45°C high-temperature cycle test |
| | Ingredients | Content B (%) | Ingredients | Content A1 (%) | Ingredients | Content A2 (%) | Ingredients | Content C (%) | Ingredients | Content D (%) | | | |
| Embodiment 1-10 | I-1 | 12 | / | / | Diethyl carbonate | 60.5 | PC | 15 | / | / | 72.5 | 67.7% | 69.3% |
| Embodiment 3-1 | I-1 | 12 | / | / | Diethyl carbonate | 55.5 | PC | 15 | IV-1 | 5 | 72.5 | 68.2% | 70.1% |
| Embodiment 3-2 | I-1 | 12 | / | / | Diethyl carbonate | 45.5 | PC | 15 | IV-1 | 15 | 72.5 | 72.9% | 73.5% |
| Embodiment 3-3 | I-1 | 12 | / | / | Diethyl carbonate | 30.5 | PC | 15 | IV-1 | 30 | 72.5 | 73.5% | 73.9% |
| Embodiment 3-4 | I-1 | 12 | / | / | Diethyl carbonate | 60.5 | / | / | IV-6 | 15 | 87.5 | 71.2% | 72.3% |
| Embodiment 3-5 | I-1 | 12 | / | / | Diethyl carbonate | 23 | / | / | IV-6 | 15 | 50 | 68.2% | 69.7% |
| Embodiment 2-5 | I-1 | 14.5 | Propyl propionate | 61 | / | / | PC | 12 | / | / | 72.5 | 70.6% | 71.2% |
| Embodiment 3-6 | I-1 | 14.5 | Propyl propionate | 61 | / | / | / | / | IV-6 | 12 | 87.5 | 72.5% | 72.9% |
| Embodiment 3-7 | I-1 | 14.5 | Propyl propionate | 49 | / | / | EC+PC | 6+6 | IV-6 | 12 | 72.5 | 73.4% | 74.1% |

"/" indicates that the material and parameter are not present.

As can be seen from the comparison between Embodiment 3-1 to Embodiment 3-5 and Embodiment 1-10 as well as the comparison between Embodiment 3-6 and Embodiment 3-7, on the basis that the electrolyte solution includes the first compound and the fluorine-containing cyclic carbonate represented by Formula I, and the mass percent of B% of the fluorine-containing cyclic carbonate represented by Formula I and the mass percent of A% of the first compound satisfy $40 \leq A \leq 80$ and $3 \leq A/B \leq 11$, the further addition of 5% to 30% of the fluoroether compound represented by Formula IV into the electrolyte solution can significantly improve the high-temperature cycle performance of the lithium-ion battery. Moreover, when a sum of the contents of the first compound, the fluorine-containing cyclic carbonate represented by Formula I, and the fluoroether compound represented by Formula IV (A% + B% + D%) in the electrolyte solution is within a range of 50% to 90%, the high-temperature cycle performance of the lithium-ion battery can be further improved. When the sum of the contents of the first compound, the fluorine-containing cyclic carbonate represented by Formula I, and the fluoroether compound represented by Formula IV is within a range of 50% to 80%, the improvement effect is especially obvious.

Lithium-ion batteries in Embodiment 4-1 to Embodiment 4-7 in Table 4 have the same composition conditions as Embodiment 1-10 except for parameters shown in Table 4. A lithium-ion battery in Embodiment 4-8 has the same composition conditions as Embodiment 2-5 except for the parameters shown in Table 4.

Table 4

| | Fluorine-containing cyclic carbonate represented by Formula I | | First compound | | | | Second compound | | Lithium salt additive | | Lithium salt | | Capacity retention rate | |
|---|---|---|---|---|---|---|---|---|---|---|---|---|---|---|
| | | | Compound of Formula II | | Compound of Formula III | | | | | | | | 40°C high-temperature cycle test | 45°C high-temperature cycle test |
| | Ingredients | Content B (%) | Ingredients | Content A1 (%) | Ingredients | Content A2 (%) | Ingredients | Content C (%) | Ingredients | Content (%) | Ingredients | Content (%) | | |
| Embodiment 1-10 | I-1 | 12 | / | / | Diethyl carbonate | 60.5 | PC | 15 | / | / | $LiPF_6$ | 12.5 | 67.7% | 69.3% |
| Embodiment 4-1 | I-1 | 12 | / | / | Diethyl carbonate | 60.5 | PC | 15 | / | / | $LiPF_6$+ LiFSI | 10+2. 5 | 70.2% | 72.2% |
| Embodiment 4-2 | I-1 | 12 | / | / | Diethyl carbonate | 60.5 | PC | 7.5 | / | / | $LiPF_6$+ LiFSI | 12.5+ 7.5 | 69.3% | 71.8% |
| Embodiment 4-3 | I-1 | 12 | / | / | Diethyl carbonate | 55.5 | PC | 15 | LiTFSI | 5 | $LiPF_6$ | 12.5 | 69.7% | 72.1% |
| Embodiment 4-4 | I-1 | 12 | / | / | Diethyl carbonate | 60.3 | PC | 15 | $LiBF_4$ | 0.2 | $LiPF_6$ | 12.5 | 73.1% | 74.2% |
| Embodiment 4-5 | I-1 | 12 | / | / | Diethyl carbonate | 60 | PC | 15 | LiBOB | 0.5 | $LiPF_6$ | 12.5 | 73.5% | 73.9% |
| Embodiment 4-6 | I-1 | 12 | / | / | Diethyl carbonate | 60 | PC | 15 | $LiPO_2F_2$ | 0.5 | $LiPF_6$ | 12.5 | 72.9% | 74.7% |
| Embodiment 4-7 | I-1 | 12 | / | / | Diethyl carbonate | 59.5 | PC | 15 | $LiPO_2F_2$ | 1 | $LiPF_6$ | 12.5 | 74.3% | 74.2% |
| Embodiment 2-5 | I-1 | 14.5 | Propyl propionate | 61 | / | / | PC | 12 | / | / | $LiPF_6$ | 12.5 | 70.6% | 71.2% |
| Comparative Embodiment 4-8 | I-1 | 14.5 | Propyl propionate | 60 | / | / | PC | 12 | LiB OB+ $LiPO_2F_2$ | 0.5+ 0.5 | $LiPF_6$+ LiFSI | 10+2. 5 | 74.3% | 75.9% |

"j" indicates that the material and parameter are not present.

As can be seen from the comparison between Embodiment 4-1 to Embodiment 4-7 and Embodiment 1-10 as well as the comparison between Embodiment 4-8 and Embodiment 2-5, on the basis that the electrolyte solution includes the first compound and the fluorine-containing cyclic carbonate represented by Formula I, and the mass percent of B% of the fluorine-containing cyclic carbonate represented by Formula I and the mass percent of A% of the first compound satisfy $40 \leq A \leq 80$ and $3 \leq A/B \leq 11$, the addition of 0.2% to 5% of the lithium salt additive (at least one of LiTFSI, $LiBF_4$, LiDFOB, LiBOB, or $LiPO_2F_2$) into the electrolyte solution can significantly improve the high-temperature cycle performance of the lithium-ion battery.

Lithium-ion batteries in Embodiment 5-1 to Embodiment 5-7 in Table 5 have the same composition conditions as Embodiment 1-10 except for parameters shown in Table 5. Lithium-ion batteries in Embodiments 5-8 and 5-9 have the same composition conditions as Embodiment 2-5 except for the parameters shown in Table 5.

Table 5

| | Fluorine-containing cyclic carbonate | | First compound | | | | Second compound | | Compound containing S=O | | Capacity retention rate | |
|---|---|---|---|---|---|---|---|---|---|---|---|---|
| | | | Compound of Formula II | | Compound of Formula III | | | | | | 40°C high-temperature cycle test | 45°C high-temperature cycle test |
| | Ingredients | Content B (%) | Ingredients | Content A1 (%) | Ingredients | Content A2 (%) | Ingredients | Content C (%) | Ingredients | Content (%) | | |
| Embodiment 1-10 | I-1 | 12 | / | / | Diethyl carbonate | 60.5 | PC | 15 | / | / | 67.7% | 69.3% |
| Embodiment 5-1 | I-1 | 12 | / | / | Diethyl carbonate | 60 | PC | 15 | V-1 | 0.5 | 69.1% | 70.2% |
| Embodiment 5-2 | I-1 | 12 | / | / | Diethyl carbonate | 59.5 | PC | 15 | V-1 | 1 | 72.8% | 72.5% |
| Embodiment 5-3 | I-1 | 12 | / | / | Diethyl carbonate | 59.8 | PC | 15 | V-8 | 0.7 | 71.2% | 71.9% |
| Embodiment 5-4 | I-1 | 12 | / | / | Diethyl carbonate | 57.5 | PC | 15 | V-8 | 3 | 74.7% | 73.5% |
| Embodiment 5-5 | I-1 | 12 | / | / | Diethyl carbonate | 54.5 | PC | 15 | V-8 | 6 | 73.3% | 72.8% |
| Embodiment 5-6 | I-1 | 12 | / | / | Diethyl carbonate | 59.5 | PC | 15 | V-6 | 1 | 71.6% | 72.7% |
| Embodiment 5-7 | I-1 | 12 | / | / | Diethyl carbonate | 57 | PC | 15 | V-8+ V-1 | 3+0.5 | 75.2% | 74.8% |
| Embodiment 2-5 | I-1 | 14.5 | Propyl propionate | 61 | / | / | PC | 12 | / | / | 70.6% | 71.2% |
| Embodiment 5-8 | I-1 | 14.5 | Propyl propionate | 61 | / | / | PC | 12 | V-8 | 3 | 73.4% | 73.9% |
| Embodiment 5-9 | I-1 | 14.5 | Propyl propionate | 61 | / | / | EC+PC | 6+6 | V-8 | 3 | 72.8% | 72.9% |

"j" indicates that the material or parameter is not present.

As can be seen from the comparison between Embodiment 5-1 to Embodiment 5-7 and Embodiment 1-10 as well as the comparison between Embodiments 5-8 and 5-9 and Embodiment 2-5, on the basis that the electrolyte solution includes the first compound and the fluorine-containing cyclic carbonate represented by Formula I, and the mass percent of B % of the fluorine-containing cyclic carbonate represented by Formula I and the mass percent of A% of the first compound satisfy $40 \leq A \leq 80$ and $3 \leq A/B \leq 11$, the further addition of 0.2% to 6% of the compound containing S=O into the electrolyte solution can significantly improve the high-temperature cycle performance of the lithium-ion battery.

Table 6 shows the length difference E between the lithium-ion battery and the electrode assembly, and its effect on the high-temperature cycle performance and energy density of the lithium-ion battery. Embodiments 6-1 and 6-3 have the identical parameters to Embodiment 1-10 except for parameter E in Table 6.

**Table 6**

| | $L_1$ (mm) | $L_2$ (mm) | E (mm) | Capacity retention rate | | Energy density (Wh/L) |
|---|---|---|---|---|---|---|
| | | | | 40°C high-temperature cycle test | 45°C high-temperature cycle test | |
| Embodiment 1-10 | 95.7 | 91.9 | 6 | 67.7% | 69.3% | 679 |
| Embodiment 6-1 | 95.75 | 93.6 | 2.2 | 67.8% | 69.4% | 694 |
| Embodiment 6-2 | 95.7 | 90.1 | 5.5 | 67.9% | 69.5% | 687.9 |
| Embodiment 6-3 | 95.7 | 90.1 | 3.8 | 68.0% | 69.9% | 690 |

In Table 6, it is prone to a side reaction and increasing consumption in the cycle process of a conventional electrolyte solution, and more electrolyte solution is required to achieve the same cycle performance, which requires that the lithium-ion battery can provide more space to reserve enough electrolyte solution, and such additional space will affect the energy density of the lithium-ion battery. In the solution, on the basis that the electrolyte solution includes the first compound and the fluorine-containing cyclic carbonate represented by Formula I, and the mass percent of B% of the fluorine-containing cyclic carbonate represented by Formula I and the mass percent of A% of the first compound satisfy $40 \leq A \leq 80$ and $3 \leq A/B \leq 11$, an electrolyte solution system is relatively stable. When $2.2 \leq E \leq 5.5$, even if the quantity of the electrolyte solution in reserve is lower than that of a conventional lithium-ion battery, the same level of high-temperature cycle performance can still be maintained, and the energy density of the lithium-ion battery is further increased.

Throughout the description, references to "some embodiments", "part of embodiments", "an embodiment", "another example", "an example", "a specific example", or "a partial example" are meant to imply that at least one of the embodiments or examples in this application includes a particular feature, structure, material, or characteristic described in that embodiment or example. Thus, the descriptions that appear at various points throughout the description, for example: "in some embodiments", "in embodiments", "in an embodiment", "in another example", "in an example", "in a particular example", or "an example" are not necessarily references to the same embodiments or examples in this application. In addition, the particular features, structures, materials, or characteristics herein may be combined in one or more embodiments or examples in any suitable manner.

Although the illustrative embodiments have been demonstrated and described, a person skilled in the art should understand that the above embodiments are not to be construed as a limitation of this application, and embodiments may be altered, substituted, and modified without departing from the spirit, principles, and scope of this application.

## Claims

1. An electrochemical device, comprising a positive electrode, a negative electrode, a separator, and an electrolyte solution; **characterized in that** the electrolyte solution comprises:

   (1) a fluorine-containing cyclic carbonate represented by Formula I,

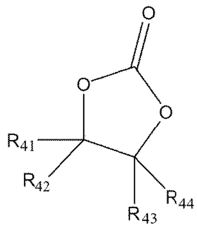 Formula I,

wherein $R_{41}$, $R_{42}$, $R_{43}$ and $R_{44}$ are each independently F, or substituted or unsubstituted $C_1$ to $C_3$ alkyl; and when substituted, substituent groups are each independently a halogen; wherein at least one of $R_{41}$, $R_{42}$, $R_{43}$ or $R_{44}$ comprises F; and

(2) a first compound, the first compound comprises at least one of a compound of Formula II or a compound of Formula III:

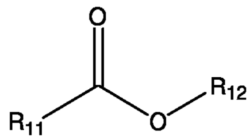

Compound of Formula II,

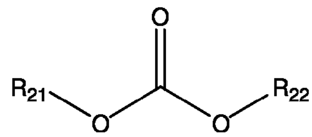

Compound of Formula III,

wherein $R_{11}$, $R_{12}$, $R_{21}$ and $R_{22}$ are each independently $C_1$ to $C_{10}$ alkyl; and
based on a total mass of the electrolyte solution, a mass percent of the first compound is A%, and a mass percent of the fluorine-containing cyclic carbonate represented by Formula I is B%, wherein $40 \leq A \leq 80$, and $3 \leq A/B \leq 11$.

2. The electrochemical device according to claim 1, **characterized in that**, $4 \leq A/B \leq 9$.

3. The electrochemical device according to claim 1 or claim 2, **characterized in that**, the electrolyte solution comprises a second compound, and the second compound comprises at least one of ethylene carbonate or propylene carbonate; wherein based on the total mass of the electrolyte solution, a mass percent of the second compound is C%, wherein $C \leq 12$.

4. The electrochemical device according to claim 3, **characterized in that**, $C \leq 8$.

5. The electrochemical device according to any one of claims 1 to 4, **characterized in that**, $4 \leq B \leq 17.5$.

6. The electrochemical device according to any one of claims 1 to 5, **characterized in that**, the electrolyte solution comprises a fluoroether compound represented by Formula IV:

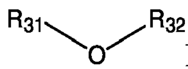 Formula IV,

wherein $R_{31}$ and $R_{32}$ are each independently selected from substituted or unsubstituted $C_1$ to $C_8$ alkyl or -R'-O-R";
R' is selected from substituted or unsubstituted $C_1$ to $C_8$ alkylidene;
R" is selected from substituted or unsubstituted $C_1$ to $C_8$ alkyl;
when substituted, substituent groups are each independently a halogen;
at least one of $R_{31}$ or $R_{32}$ comprises F; and
based on the total mass of the electrolyte solution, a mass percent of the fluoroether compound represented by Formula IV is D%, and $5 \leq D \leq 30$.

7. The electrochemical device according to claim 6, **characterized in that**, 50 ≤ (A+B+D) <_ 90.

8. The electrochemical device according to claim 6, **characterized in that**, 60 ≤ (A+B+D) <_ 80.

9. The electrochemical device according to any one of claims 1 to 8, **characterized in that**, the compound of Formula II

comprises at least one of the following compounds: methyl formate, ethyl formate, methyl acetate, ethyl acetate, propyl acetate, methyl propionate, ethyl propionate, or propyl propionate; and
the compound of Formula III comprises at least one of the following compounds: dimethyl carbonate, diethyl carbonate, or ethyl methyl carbonate.

**10.** The electrochemical device according to any one of claims 1 to 9, **characterized in that**, the fluorine-containing cyclic carbonate represented by Formula I comprises at least one of the following compounds:

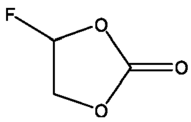 I-1, 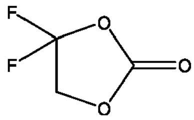 I-2, 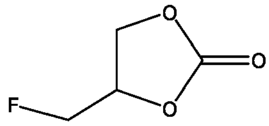 I-3,

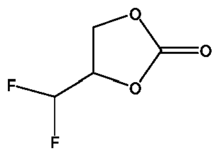 I-4, 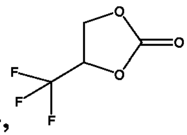 I-5, 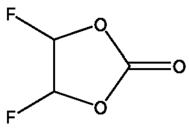 I-6,

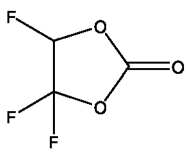 I-7, 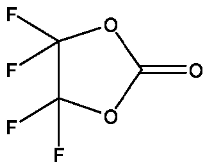 I-8, 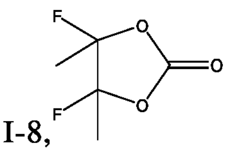 I-9,

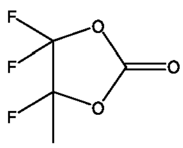 I-10, 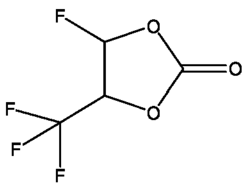 I-11, or 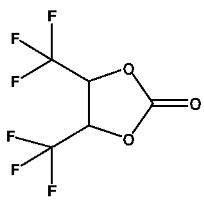 I-12.

**11.** The electrochemical device according to claim 6, **characterized in that**, the fluoroether compound represented by Formula IV comprises at least one of the following compounds:

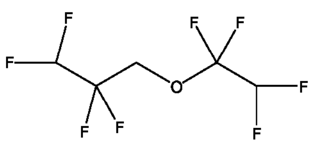 IV-1, 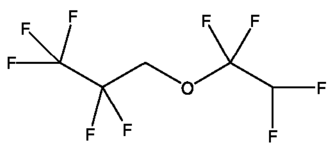 IV-2,

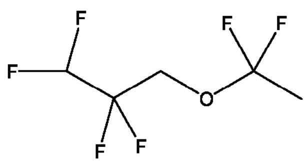 IV-3, 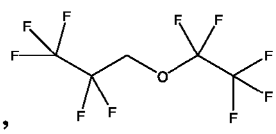 IV-4,

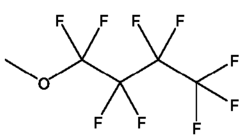 IV-5, 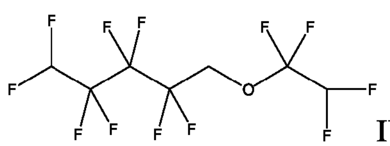 IV-6,

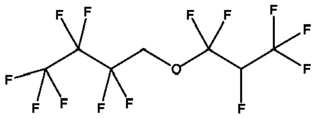 IV-7, 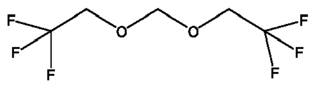 IV-8,

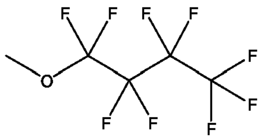 IV-9, or 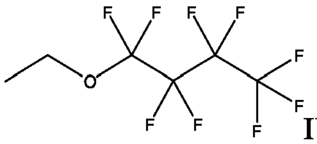 IV-10.

**12.** The electrochemical device according to any one of claims 1 to 11, **characterized in that**, the electrolyte solution comprises a lithium salt additive; the lithium salt additive comprises at least one of the following lithium salts: lithium bistrifluoromethanesulfonimide LiTFSI, lithium tetrafluoroborate $LiBF_4$, lithium difluoro(oxalato) borate LiDFOB, lithium bis(oxalato)borate LiBOB, or lithium difluorophosphate $LiPO_2F_2$; and
based on the mass of the electrolyte solution, a mass percent of the lithium salt additive is 0.01% to 5%.

**13.** The electrochemical device according to any one of claims 1 to 12, **characterized in that**, the electrolyte solution comprises a compound containing S=O; and the compound containing S=O comprises at least one of the following compounds:

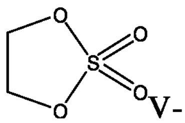 V-1, 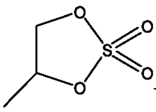 V-2, 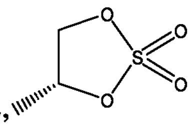 V-3,

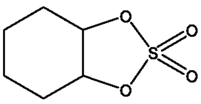 V-4, 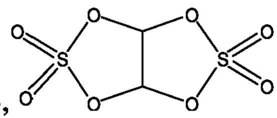 V-5, 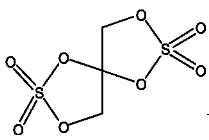 V-6,

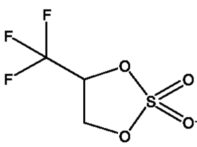 V-7, 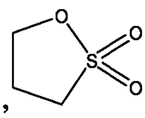 V-8, 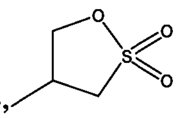 V-9,

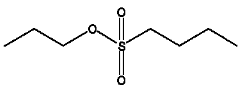 V-10, 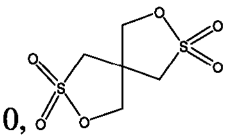 V-11, 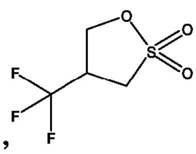 V-12,

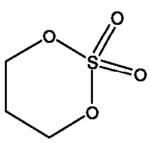 V-13, 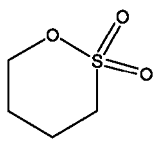 V-14, or 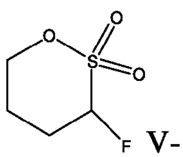 V-15;

wherein based on the total mass of the electrolyte solution, a mass percent of the compound containing S=O is 0.2% to 6%.

**14.** The electrochemical device according to any one of claims 1 to 13, **characterized in that**, the electrochemical device comprises an electrode assembly and an outer packaging bag layer, $L_1$ mm is a length of the electrochemical device in a direction of tabs extending from the outer packaging bag layer, $L_2$ mm is a length of the electrode assembly in the direction of the tabs extending from the outer packaging bag layer, and $L_1 - L_2$ is E, wherein $2.2 \leq E \leq 5.5$.

**15.** An electronic device, comprising the electrochemical device according to any one of claims 1 and 14.

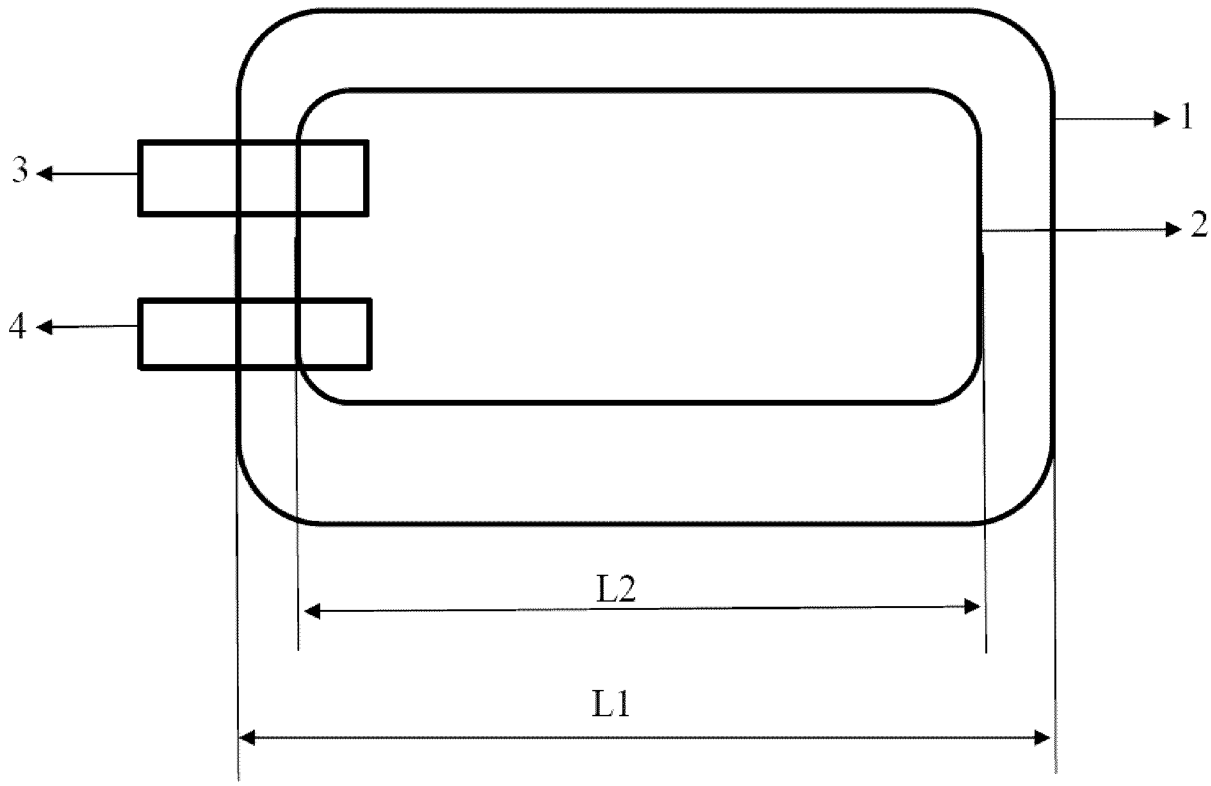
1
2
3
4
L2
L1

Europäisches Patentamt
European Patent Office
Office européen des brevets

# EUROPEAN SEARCH REPORT

Application Number
EP 24 20 3368

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/379045 A1 (HE HUI [US] ET AL) 12 December 2019 (2019-12-12) * claims 1,2,4,21,9,10,23 * * the whole document * ----- | 1-15 | INV. H01M10/0525 H01M10/0567 |
| X | KR 2023 0129880 A (LG ENERGY SOLUTION LTD [KR]) 11 September 2023 (2023-09-11) * claim 9, claim 10, tables 1 to 4 * * the whole document * ----- | 1-15 | |
| X | CN 114 678 493 A (PEARL HUAI GIAU BATTERY CO LTD) 28 June 2022 (2022-06-28) * claim 2, claim 3, claim 4, claim 6, table 1 * * the whole document * ----- | 1-15 | |
| A | CN 101 640 285 A (SHANGHAI BYD CO LTD) 3 February 2010 (2010-02-03) * example 1 * * the whole document * ----- | 1-15 | |
| | | | TECHNICAL FIELDS SEARCHED (IPC) |
| | | | H01M |

1

The present search report has been drawn up for all claims

| Place of search | Date of completion of the search | Examiner |
|---|---|---|
| The Hague | 23 January 2025 | Ziegler, Jan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO.

EP 24 20 3368

This annex lists the patent family members relating to the patent documents cited in the above-mentioned European search report. The members are as contained in the European Patent Office EDP file on
The European Patent Office is in no way liable for these particulars which are merely given for the purpose of information.

23-01-2025

| Patent document cited in search report | Publication date | Patent family member(s) | Publication date |
|---|---|---|---|
| US 2019379045 A1 | 12-12-2019 | NONE | |
| KR 20230129880 A | 11-09-2023 | NONE | |
| CN 114678493 A | 28-06-2022 | NONE | |
| CN 101640285 A | 03-02-2010 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 9812739 B